# EUROPEAN PATENT SPECIFICATION

(11) **EP 2 440 989 B1**
(45) Date of publication and mention of the grant of the patent: **12.04.2017**
(21) Application number: 10786674.1
(22) Date of filing: 08.06.2010
(51) Int. Cl.: G06F 3/041, B64D 11/06, E06B 9/24

(54) **TOUCH RESPONSIVE PRIVACY PARTITION**
AUF BERÜHRUNGEN REAGIERENDE DATENSCHUTZPARTITION
SÉPARATION DE PROTECTION DE L'INTIMITÉ À EFFLEUREMENT

(30) Priority: 08.06.2009 US 185022 P
(43) Date of publication of application: 18.04.2012
(73) Proprietor: BE Aerospace, Inc., Wellington, FL 33414 (US)
(72) Inventor: ALFORD, Dan, Statesville NC 28625 (US)
(74) Representative: Algemeen Octrooi- en Merkenbureau B.V.
(86) International application number: PCT/US2010/037736
(87) International publication number: WO 2010/144420

(56) References cited:
- US-A1- 2007 246 981
- US-B2- 7 348 736
- US-B2- 7 355 161
- US-B2- 7 419 211
- US-B2- 7 450 294
- US-B2- 7 508 381
- US-B2- 7 517 567
- FISCHETTI, M.: 'Smart Glass: Private and Cool.' SCIENTIFIC AMERICAN, [Online] September 2005, pages 116 - 117, XP055139067 Retrieved from the Internet: <URL:http://windows.lbl.gov/commperf/electr ochromic/refs/attachmt17.8sciam.pdf> [retrieved on 2010-07-22]
- PETRAGLIA, J. SPD: 'Smart Glass Electronics Overview.' ANNUAL MEETING OF RESEARCH FRONTIERS, INC 14 June 2007, pages 1 - 8, XP055129110

## Description

### TECHNICAL FIELD AND BACKGROUND OF THE INVENTION

### 1. Field of the Invention

The present invention relates generally to the field of privacy partitions for passenger seats, and more particularly, to a privacy partition disposed between adjacent passenger seats having touch-responsive functionality embedded within the partition screen for selectively switching between opaque and transparent optical states of the screen.

### 2. Background of the Invention

Passenger conveyances such as aircrafts commonly utilize dividing partitions positioned between adjacent seats to provide privacy therebetween and define passenger living spaces as known for example from US 2007/0246981 A1. Workspace separators with controlable privacy are known from US 7 348 736 B2. Conventional partition types most commonly include permanently optically opaque structures that may or may not be moveable between in-use and stowed positions. While permanently positioned structures are advantageous in that they include simple construction without the need for moving parts, thus achieving cost and weight savings, they are disadvantageous in that they cannot be moved out of the way when line of sight between seats is desired. In contrast, while moveable partitions provide selective blocking and non-blocking functionality, their construction typically comes with increased weight and complexity in the assemblies required to physically move the partition between in-use and stowed positions. In addition, moveable partitions further require dedicated storage space and thus reduce the amount of living or compartment space available to the seat occupant.

Accordingly, what is desired is a passenger seat partition that provides the functionality of a moveable partition with the structural simplicity and weight savings of a permanent partition. In this regard, a partition is provided herein having touch-responsive functionality embedded within the partition screen for selectively switching between opaque and transparent optical states of the partition screen, obviating the need for moving the partition between in-use and stowed positions to block or allow line of sight between seats.

### BRIEF SUMMARY OF THE INVENTION

In one aspect, a privacy partition for an aircraft passenger seat is provided herein.

In another aspect, the privacy partition includes a screen that is selectively switchable between opaque and transparent optical states.

In another aspect, the privacy partition screen is activated in the presence of an electrical field.

In another aspect, the privacy partition includes a touch-responsive switch carried on or embedded within the optically switchable portion of the partition.

In yet another aspect, the partition includes a frame surrounding the periphery of the electrically activated screen.

In yet another aspect, the partition is positioned between adjacent passenger seats.

In yet another aspect, the partition is positioned between adjacent passenger seats and about parallel to their respective armrests.

In yet another aspect, the partition is supported upon a shared console positioned between adjacent passenger seats.

To achieve the foregoing and other aspects and advantages, in one embodiment the present invention provides an aircraft passenger seat privacy partition including a screen selectively switchable between an opaque optical state and a substantially transparent optical state in response to a change in voltage applied to the screen, a touch-responsive switch embedded in the screen for detecting a change in capacitance in the screen and applying the voltage change to the screen to selectively switch between the opaque and substantially transparent optical states and a support member for supporting the screen between adjacent passenger seats.

In a further embodiment, the screen includes suspended particles placed between two plastic or glass layers, and wherein in the absence of voltage applied to the screen the suspended particles are arranged in random orientations and absorb or scatter light to achieve the opaque optical state, and wherein when voltage is applied to the screen the suspended particles align to let light pass therethrough to achieve the transparent optical state. In a further embodiment, the substantially transparent optical state is maintained by applying a relatively small, constant voltage to the screen.

In a further embodiment, the screen is surrounding by a protective frame surrounding the periphery of the screen an the frame is supported upon a center console shared by adjacent passenger seats. In a further embodiment, the screen includes indicia thereon indicating the location of the embedded touch-responsive switch, and in an alternative embodiment, substantially the entirety of the screen is the touch-responsive switch accessible on either side of the screen.

In a further embodiment, an aircraft seating unit is provided including first and second passenger seats positioned adjacent one another and interconnected through a shared center console, and a privacy partition supported by the center console, the privacy partition comprising a screen selectively switchable between an opaque optical state and a substantially transparent optical state in response to a change in voltage applied to the screen, and a touch-responsive switch embedded in the screen for detecting a change in capacitance in the screen and applying the voltage change to the screen to selectively switch between the opaque and substantially transparent optical states.

Additional features and advantages of the invention will be set forth in the detailed description which follows, and in part will be readily apparent to those skilled in the art from that description or recognized by practicing the invention as described herein.

### BRIEF DESCRIPTION OF THE DRAWINGS

These and other features, aspects and advantages of the present invention are better understood when the following detailed description of the invention is read with reference to the accompanying drawings, in which:
FIG. 1 is a perspective view of an exemplary aircraft seating arrangement showing a privacy partition in accordance with the present invention positioned between adjacent passenger seats;
FIG. 2a is a perspective view of the privacy partition of FIG. 1 shown in an opaque optical state;
FIG. 2b is a perspective view of the privacy partition of FIG. 1 shown being activated by an embedded touch-responsive switch to achieve a transparent optical state;
FIG. 2c is a perspective view of the privacy partition of FIG. 1 shown being activated by an embedded touch-responsive switch to achieve an opaque optical state;
FIG. 3a is a schematic diagram illustrating the misalignment of suspended particles of the partition in the opaque optical state corresponding with FIG 2a;
FIG. 3b is a schematic diagram illustrating the alignment of suspended particles of the partition in the transparent optical state corresponding with FIG. 2b; and
FIG. 3c is a schematic diagram illustrating the misalignment of suspended particles of the partition in the opaque optical state corresponding with FIG. 3c; and
FIG. 4 is a wiring diagram for the touch-responsive functionality of the partition.

### DETAILED DESCRIPTION OF THE INVENTION

The present invention will now be described more fully hereinafter with reference to the accompanying drawings in which exemplary embodiments of the invention are shown. However, the invention may be embodied in many different forms and should not be construed as limited to the representative embodiments set forth herein. The exemplary embodiments are provided so that this disclosure will be both thorough and complete, and will fully convey the scope of the invention and enable one of ordinary skill in the art to make, use and practice the invention.

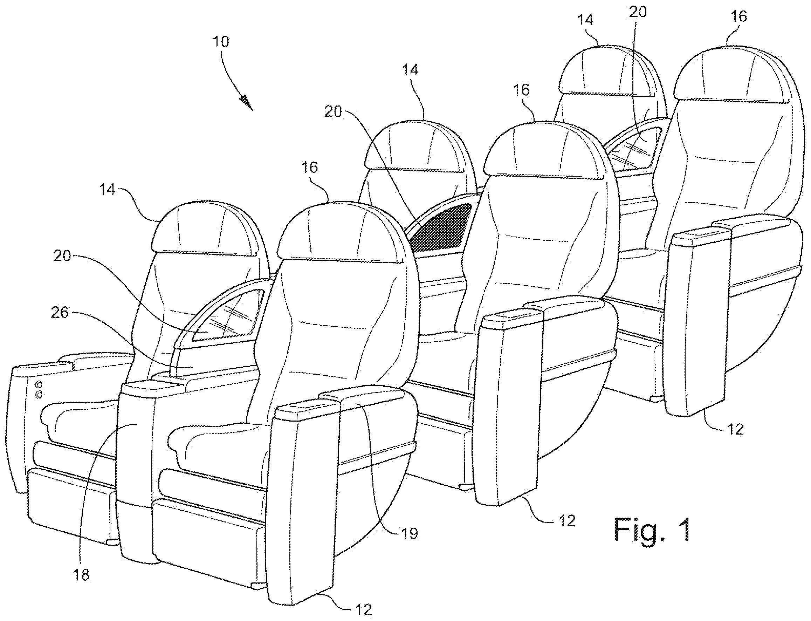

Referring to FIG. 1, an exemplary aircraft passenger seating arrangement is shown generally at reference numeral 10. As shown, the seating arrangement 10 includes a plurality of spaced-apart rows of seating units 12, with each seating unit 12 including a first seat 14 and a second seat 16 positioned in a side-by-side relationship and separated by a shared console 18. Each seating unit 12 further includes dedicated armrests 19 and seat frames for supporting seatbacks, seat bottoms, leg rests, storage compartments, etc. as known to those skilled in the art. Although a particular seating arrangement 10 and seating unit 12 is shown, it is envisioned that alternative seating arrangements and seating units including at least alternative numbers of rows, seats within a row, seat orientations and angular relationships between individual seats may be practiced without departing from the scope of the invention.

Privacy partition 20 is positioned between each pair of adjacent seats 14 and 16, thus physically and optically dividing the living spaces defined by each of seat 14 and 16. As shown, partition 20 is fixed in its position and is supported from beneath by at least shared console 18. In alternative embodiments, partition 20 may be supported by or carried on alternative structures including, but not limited to, armrests, seat frames, seat bottoms, seat backs, aircraft floors or any other structure. Although shown as having a generally triangular shape, partition 20 may have any alternative shape, and the shape may be dependent upon its place of application within the aircraft cabin and the area desired to be blocked by partition 20. Partitions 20 of the end seating units 12 are shown in their transparent optical states, allowing a seat occupant viewing therethrough, while partition 20 disposed in intermediate seating unit 12 is shown in its opaque optical state, blocking viewing therethrough.

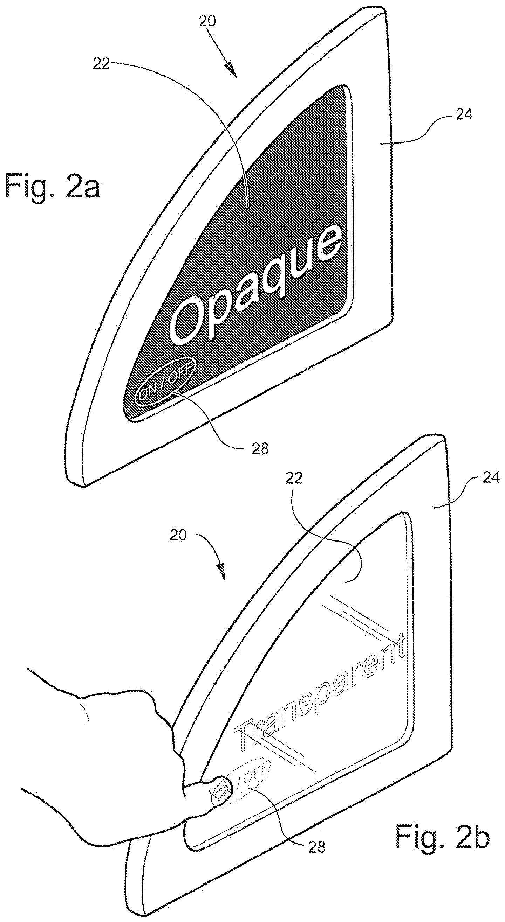

Referring to FIG. 2a, partition 20 generally includes an electrically activated screen 22 framed by protective frame 24. Frame 24 functions to protect the edges of screen 22 and optionally may house and maintain associated screen wiring. Frame 24 may be constructed from plastic, glass or like material and may include fire retardant additives, coatings, etc. Frame 24 may be optically transparent or opaque. As shown in FIG. 1, partition 20 is supported from beneath through frame 22 by partition supporting member 26. It is envisioned that alternative shaped and positioned partition supporting members may be practiced depending upon the desired positioning of partition 20 and the existing structure to be supported therefrom.

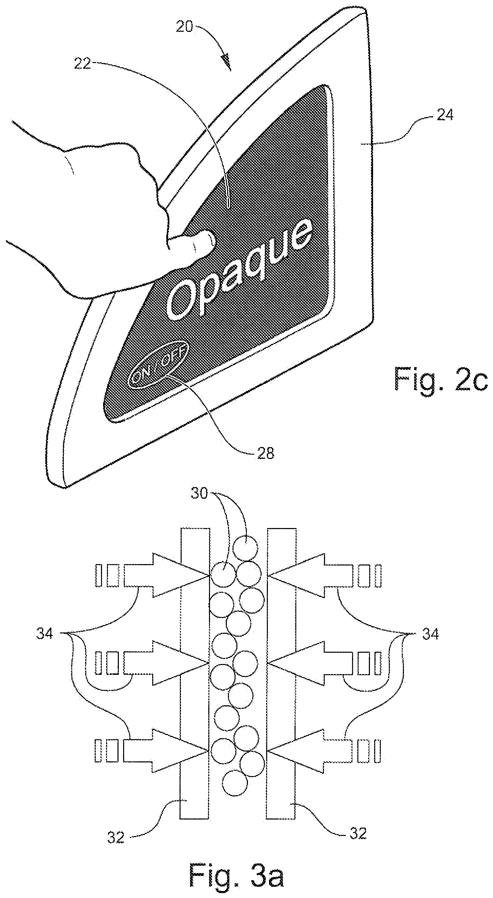

Referring to FIGS. 2a-2c, various optical states of partition 20 are shown, and the indicia "Opaque" and "transparent" shown in the figures are for illustrative purposes only, while the indicia "On/Off" shown in the figures to represent a soft button may or may not be provided on the screen to display the control functionality to the seat occupant. Referring specifically to FIG 2a, partition 20 is shown in an opaque optical state wherein viewing therethrough is blocked. The degree of opaqueness of screen 22 may range from translucent to fully opaque to provide an effective partition. Touch-responsive "On/Off" control functionality by way of contact with the glass may be provided at a single dedicated location 28 on screen 22 or may encompass the entirety of screen 22. Although described in greater detail below, the control functionality of screen 22 is preferably carried on or embedded within screen 22 of partition 20. Referring specifically to FIG. 2b, selective switching between the opaque optical state of FIG. 2a and the transparent optical state of FIG. 2b is achieved by actuating the control functionality of screen 22, such as through dedicated location 28, which is described in greater detail below. Referring specifically to FIG. 2c, switching between the transparent optical state shown in FIG. 2b and the opaque optical state shown in FIG. 2c may be achieved by actuating any portion of screen 22 by touch-response. Actuation of screen 22 may be achieved by contacting either side of screen 22 such that either the left-side or right-side seated occupant may control the partition.

Screen 22 may be constructed from smart glass, switchable glass or other electrochromic materials or suspended particle materials including electrically switchable material or glazing that changes light transmission properties when voltage is applied. Screen 22 changes from a transparent optical state to an opaque or translucent state when screen 22 is contacted to apply/remove the voltage thereto through a change in capacitance caused by the contact with screen 22. Suitable material types typically require a burst of electricity to change opacity, and may or may not require a small voltage to maintain particle alignment and a transparent optical state. In an alternative embodiment, electrochromic materials pertaining to transition-metal hydride electrochromics can be used to provide reflective hydrides that are reflective rather than absorbing, thus switch optical states between transparent and mirror-like.

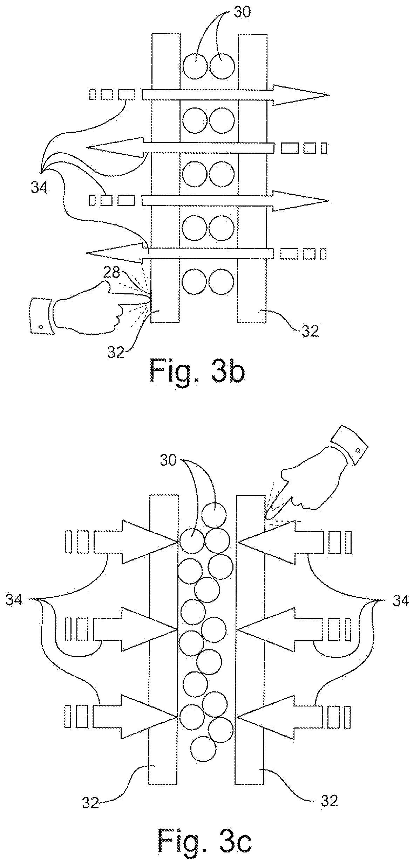

Referring to FIGS. 3a-3c, schematic diagrams illustrating the alignment of suspended particle materials of screen 22 corresponding to FIGS. 2a-2c are shown. Referring specifically to FIG. 3a, screen 22 includes suspended particles 30, such as a thin film laminate of rod-like particles suspended in a fluid and placed between two glass or plastic layers 32, or alternatively attached to one layer. In the absence of voltage to screen 22, the suspended particles 30 are arranged in random orientations and absorb or scatter light 34 so that screen 22 appears opaque. Referring to FIG. 3b, when voltage is applied by contacting screen 22, such as at location 28, suspended particles 30 align to let light 34 pass therethrough and achieve a transparent optical state. As stated above, maintaining the transparent optical state may require applying a small, constant voltage depending upon material type. Referring specifically to FIG. 3c, screen 22 is actuated to remove the voltage and return to the opaque optical state.

Screen 22 is operable such that a passenger actuating touch-responsive area 28, or the entirety of screen 22, causes screen 22 to switch between transparent and opaque optical states. In a specific embodiment, a seat occupant may place screen 22 into a default optical state, such as opaque, overriding the control of the adjacently seated passenger. Override control may be provided through a designated touch-responsive area on screen 22 or through a hard control positioned apart from screen 22.

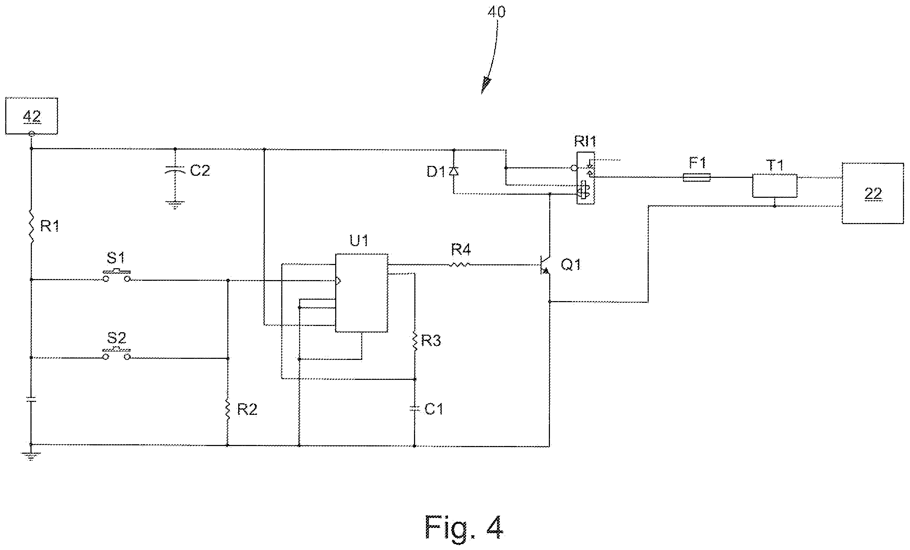

Referring to FIG. 4, control and operation of screen 22 achieved by way of a control circuit, such as electrical circuit 40. Circuit 40 includes power supply 42 for providing a predetermined voltage, for example between about 7-12 volts. Power supply 42 may include a dedicated source or shared source. In an exemplary embodiment, circuit 40 includes the following: R1:1M ohm resistor; R2:1k ohm resistor; R3:100k ohm resistor; R4:1k ohm resistor; C1, C3:220nF Capacitor; C2;10uF Electrolytic Capacitor, 50V; D1:Rectifier, 1A 400V; U1:Power Converter such as one available from NXP Semiconductors; S1:Single Pole Single Throw Switch; S2:Single Pole Single Throw Switch; F1:Fuse, 3A; RL1:Single Pole Double Throw Relay; and T1:Inverter, 12 VDC/120 VAC 400 Hz. Touching screen 22 causes a localized change of capacitance at the touch location that is detected by circuit 40, thereby prompting an optical state change through the closing/opening of the switch causing the application/removal of the predetermined voltage.

It is envisioned that each partition 20 may be individually controlled or the plurality of partitions 20 may be interconnected such that a single control may be operable for setting the plurality of partitions to a default or common optical state, such as a transparent state that may be required during TTOL. Thus, the flight crew may be able to commonly control partition functionality, and this control may override the independent control at the seat.

While an improved privacy partition has been described with reference to specific embodiments and examples, it is intended that various details of the invention may be changed without departing from the scope of the invention as defined by the appended claim. Furthermore, the foregoing description of the preferred embodiments of the invention and best mode for practicing the invention are provided for the purpose of illustration only and not for the purpose of limitation.

## Claims

1. An aircraft passenger seat privacy partition (20), comprising:
a screen (22) selectively switchable between an operational state and a non-operational state;
a support member (26) for supporting the screen (22) between adjacent passenger seats (14, 16)
**characterised, in that**
the screen (22) is selectively switchable between an opaque optical operational state and a substantially transparent optical non-operational state in response to a change in voltage applied to the screen; and
a touch-responsive switch (28) embedded in the screen (22) for detecting a change in capacitance in the screen and applying the voltage change to the screen to selectively switch between the opaque and substantially transparent optical states.

2. The privacy partition according to claim 1, wherein the screen (22) includes suspended particles (30) placed between two layers (32), and wherein in the absence of voltage applied to the screen the suspended particles are arranged in random orientations and absorb or scatter light to achieve the opaque optical state, and wherein when voltage is applied to the screen the suspended particles align to let light pass therethrough to achieve the transparent optical state.

3. The privacy partition according to claim 1, wherein the substantially transparent optical state is maintained by applying a relatively small, constant voltage to the screen.

4. The privacy partition according to claim 1, further comprising a frame (24) surrounding the periphery of the screen.

5. The privacy partition according to claim 1, further comprising indicia on the screen for indicating the location (28) of the embedded touch-responsive switch.

6. The privacy partition according to claim 1, wherein substantially the entirety of the screen (22) comprises the touch-responsive switch.

7. The privacy partition according to claim 1, further comprising a touch-responsive switch override positioned apart from the screen.

8. An aircraft seating unit (12), comprising: first and second passenger seats (14, 16) positioned adjacent one another and interconnected through a shared center console (18); and a privacy partition (20) according to any of claims 1-7, the privacy partition being supported by the center console.

9. The aircraft seating unit according to claim 8, wherein the screen (22) includes suspended particles (30) placed between two layers (32), and wherein in the absence of voltage applied to the screen the suspended particles are arranged in random orientations and absorb or scatter light to achieve the opaque optical state, and wherein when voltage is applied to the screen the suspended particles align to let light pass therethrough to achieve the transparent optical state.

10. The aircraft seating unit according to claim 8, wherein the substantially transparent optical state is maintained by applying a relatively small, constant voltage to the screen.

11. The aircraft seating unit according to claim 8, further comprising a frame (24) surrounding the periphery of the screen.

12. The aircraft seating unit according to claim 8, wherein the privacy partition is supported upon the center console (18).

13. The aircraft seating unit according to claim 8, further comprising indicia on the screen for indicating the location (28) of the embedded touch-responsive switch.

14. The aircraft seating unit according to claim 8, wherein substantially the entirety of the screen comprises the touch-responsive switch.

15. The aircraft seating unit according to claim 8, further comprising a touch-responsive switch override positioned apart from the screen.

## Patentansprüche

1. Privatsphärenabschottung (20) für einen Flugzeugpassagiersitz, mit:
einer Schutzwand (22), die selektiv zwischen einem Betriebszustand und einem Nicht-Betriebszustand umschaltbar ist;
einem Halterungsteil (26), um die Schutzwand (22) zwischen benachbarten Passagiersitzen (14, 16) zu haltern,
**dadurch gekennzeichnet, dass**
die Schutzwand (22) im Ansprechen auf eine Änderung einer an die Schutzwand angelegten Spannung selektiv zwischen einem opaken optischen Betriebszustand und einem im Wesentlichen transparenten optischen Nicht-Betriebszustand umschaltbar ist; und
einem in die Schutzwand (22) eingebetteten, berührungsempfindlichen Schalter (28) zum Erfassen einer Änderung der Kapazität an der Schutzwand und Anlegen der Spannungsänderung an die Schutzwand, um selektiv zwischen dem opaken und dem im Wesentlichen transparenten optischen Zustand umzuschalten.

2. Privatsphärenabschottung nach Anspruch 1, wobei die Schutzwand (22) Schwebeteilchen (30) aufweist, die zwischen zwei Schichten (32) angeordnet sind, und wobei bei Abwesenheit einer an die Schutzwand angelegten Spannung die Schwebeteilchen in zufälligen Ausrichtungen angeordnet sind und Licht absorbieren oder streuen, um den opaken optischen Zustand zu erlangen, und wobei sich die Schwebeteilchen bei Anlegen einer Spannung an die Schutzwand ausrichten, um zur Erlangung des transparenten optischen Zustands Licht hindurchzulassen.

3. Privatsphärenabschottung nach Anspruch 1, wobei der im Wesentlichen transparente optische Zustand durch Anlegen einer relativ kleinen, konstanten Spannung an die Schutzwand aufrechterhalten wird.

4. Privatsphärenabschottung nach Anspruch 1, darüber hinaus mit einem Rahmen (24), der den Randbereich der Schutzwand umgibt.

5. Privatsphärenabschottung nach Anspruch 1, darüber hinaus mit Symbolen auf der Schutzwand zur Angabe des Ortes (28) des eingebetteten berührungsempfindlichen Schalters.

6. Privatsphärenabschottung nach Anspruch 1, wobei im Wesentlichen die gesamte Schutzwand (22) den berührungsempfindlichen Schalter umfasst.

7. Privatsphärenabschottung nach Anspruch 1, darüber hinaus mit einer Überbrückungseinrichtung für den berührungsempfindlichen Schalter, die abgesetzt von der Schutzwand positioniert ist.

8. Flugzeugsitzeinheit (12), mit: einem ersten und einem zweiten Passagiersitz (14, 16), die benachbart angeordnet und über eine gemeinsame Mittelkonsole (18) miteinander verbunden sind; und einer Privatsphärenabschottung (20) nach einem der Ansprüche 1 bis 7, wobei die Privatsphärenabschottung an der Mittelkonsole gehaltert ist.

9. Flugzeugsitzeinheit nach Anspruch 8, wobei die Schutzwand (22) Schwebeteilchen (30) aufweist, die zwischen zwei Schichten (32) angeordnet sind, und wobei bei Abwesenheit einer an die Schutzwand angelegten Spannung die Schwebeteilchen in zufälligen Ausrichtungen angeordnet sind und Licht absorbieren oder streuen, um den opaken optischen Zustand zu erlangen, und wobei sich die Schwebeteilchen bei Anlegen einer Spannung an die Schutzwand ausrichten, um zur Erlangung des transparenten optischen Zustands Licht hindurchzulassen.

10. Flugzeugsitzeinheit nach Anspruch 8, wobei der im Wesentlichen transparente optische Zustand durch Anlegen einer relativ kleinen, konstanten Spannung an die Schutzwand aufrechterhalten wird.

11. Flugzeugsitzeinheit nach Anspruch 8, darüber hinaus mit einem Rahmen (24), der den Randbereich der Schutzwand umgibt.

12. Flugzeugsitzeinheit nach Anspruch 8, wobei die Privatsphärenabschottung obenauf an der Mittelkonsole (18) gehaltert ist.

13. Flugzeugsitzeinheit nach Anspruch 8, darüber hinaus mit Symbolen auf der Schutzwand zur Angabe des Ortes (28) des eingebetteten berührungsempfindlichen Schalters.

14. Flugzeugsitzeinheit nach Anspruch 8, wobei im Wesentlichen die gesamte Schutzwand den berührungsempfindlichen Schalter umfasst.

15. Flugzeugsitzeinheit nach Anspruch 8, darüber hinaus mit einer Überbrückungseinrichtung für den berührungsempfindlichen Schalter, die abgesetzt von der Schutzwand positioniert ist.

## Revendications

1. Séparation de protection de l'intimité (20) de siège de passager d'aéronef, comprenant :
un écran (22) sélectivement commutable entre un état opérationnel et un état non opérationnel ;
un élément de support (26) pour supporter l'écran (22) entre des sièges de passagers adjacents (14, 16),
**caractérisée en ce que**
l'écran (22) est sélectivement commutable entre un état optique opaque opérationnel et un état optique sensiblement transparent non opérationnel en réponse à un changement de tension appliquée à l'écran ; et
un commutateur sensible au toucher (28) intégré dans l'écran (22) pour détecter un changement de capacité dans l'écran et appliquer le changement de tension à l'écran pour commuter sélectivement entre les états optiques opaque et sensiblement transparent.

2. Séparation de protection de l'intimité selon la revendication 1, dans laquelle l'écran (22) comporte des particules en suspension (30) placées entre deux couches (32), et dans laquelle, en l'absence de tension appliquée à l'écran les particules en suspension sont agencées selon des orientations aléatoires et absorbent ou diffusent de la lumière pour obtenir l'état optique opaque, et dans laquelle lorsqu'une tension est appliquée à l'écran les particules en suspension s'alignent pour laisser de la lumière le traverser pour obtenir l'état optique transparent.

3. Séparation de protection de l'intimité selon la revendication 1, dans laquelle l'état optique sensiblement transparent est maintenu en appliquant à l'écran une tension constante relativement faible.

4. Séparation de protection de l'intimité selon la revendication 1, comprenant en outre un cadre (24) entourant la périphérie de l'écran.

5. Séparation de protection de l'intimité selon la revendication 1, comprenant en outre un indice sur l'écran pour indiquer l'emplacement (28) du commutateur sensible au toucher intégré.

6. Séparation de protection de l'intimité selon la revendication 1, dans laquelle sensiblement l'intégralité de l'écran (22) comprend le commutateur sensible au toucher.

7. Séparation de protection de l'intimité selon la revendication 1, comprenant en outre une commande d'annulation pour commutateur sensible au toucher positionnée à l'écart de l'écran.

8. Unité de siège d'aéronef (12), comprenant : des premier et deuxième sièges de passagers (14, 16) positionnés adjacents l'un à l'autre et reliés par l'intermédiaire d'une console centrale partagée (18) ; et une séparation de protection de l'intimité (20) selon l'une des revendications 1 à 7, la séparation de protection de l'intimité étant supportée par la console centrale.

9. Unité de siège d'aéronef selon la revendication 8, dans laquelle l'écran (22) comporte des particules en suspension (30) placées entre deux couches (32), et dans laquelle, en l'absence de tension appliquée à l'écran les particules en suspension sont agencées selon des orientations aléatoires et absorbent ou diffusent de la lumière pour obtenir l'état optique opaque, et dans laquelle lorsqu'une tension est appliquée à l'écran les particules en suspension s'alignent pour laisser de la lumière le traverser pour obtenir l'état optique transparent.

10. Unité de siège d'aéronef selon la revendication 8, dans laquelle l'état optique sensiblement transparent est maintenu en appliquant à l'écran une tension constante relativement faible.

11. Unité de siège d'aéronef selon la revendication 8, comprenant en outre un cadre (24) entourant la périphérie de l'écran.

12. Unité de siège d'aéronef selon la revendication 8, dans laquelle la séparation de protection de l'intimité est supportée sur la console centrale (18).

13. Unité de siège d'aéronef selon la revendication 8, comprenant en outre un indice sur l'écran pour indiquer l'emplacement (28) du commutateur sensible au toucher intégré.

14. Unité de siège d'aéronef selon la revendication 8, dans laquelle sensiblement l'intégralité de l'écran comprend le commutateur sensible au toucher.

15. Unité de siège d'aéronef selon la revendication 8, comprenant en outre une commande d'annulation pour commutateur sensible au toucher positionnée à l'écart de l'écran.
